# DEMANDE DE BREVET EUROPEEN

(11) **EP 2 211 504 A1**
(43) Date de publication de la demande: **28.07.2010**
(21) Numéro de dépôt: 10151434.7
(22) Date de dépôt: 22.01.2010
(51) Int. Cl.: H04L 12/24

(54) **Procédé de classification coopérative de trafics IP**

(30) Priorité: 26.01.2009 FR 0900334
(71) Demandeur: Alcatel Lucent, 75008 Paris (FR)
(72) Inventeur: Carofiglio, Giovanna, 91620, NOZAY (FR)
(74) Mandataire: Thibaud, Jean-Baptiste

(57) **Abrégé**

Procédé de classification de trafic au sein d'un réseau de bordure comprenant une pluralité de noeuds de réseau interconnectés, qui comprend :
- une étape d'apprentissage, généralement effectuée hors ligne, permettant d'identifier les applications dans le trafic sur la base d'un ou plusieurs attributs de caractérisation
- une étape de classification en ligne du trafic en utilisant les résultats de l'étape d'apprentissage
procédé **caractérisé en ce que** :
- l'étape d'apprentissage est effectuée au niveau d'un sous-ensemble de noeuds du réseau, strictement inclus dans l'ensemble des noeuds du réseau
et en ce qu'il comprend, préalablement à l'étape de classification :
- une étape de collecte des résultats de l'étape d'apprentissage ;
- une étape de traitement numérique des résultats ;
- une étape de diffusion des résultats du traitement aux autres noeuds du réseau.

## Description

La présente invention concerne le domaine des applications de gestion du trafic sur un réseau IP et plus particulièrement de la classification du trafic au niveau des noeuds des réseaux IP.

La classification du trafic sur un réseau IP de télécommunications ou d'entreprises se définit par la capacité de catégoriser et caractériser le trafic sur le réseau.

La classification du trafic est notamment effectuée en fonction du type d'applications. Elle est importante quels que soient les flux des applications, et en particulier que ces flux soient chiffrés ou non. A titre d'exemples non limitatifs d'applications, on peut citer Peer-to-Peer (P2P) (edonkey, BitTorrent, FastTrack, WinMX, Direct Connect), ftp, web (http, https), dns, mail/news (smtp, pop, imap, identd, nntp), streaming (quicktime, shoutcast, logitech Video IM, real, wmp, vibrick streaming), opérations réseaux (netbios, smb, snmp, ntp, spamassasin, GoToMyPc), cryptage (ssh,ssl), jeux en réseaux (Age of empires, Quake, HalfLife), messagerie instantanée ( MSN Messenger, Yahoo messanger, AIM), attaque (scanner des adresses, scanners des ports).

La classification de trafics IP est d'une grande utilité pour les opérateurs réseaux IP et les fournisseurs d'équipements télécoms car elle permet une meilleure gestion des réseaux IP. Il s'agit d'un prétraitement indispensable dans plusieurs procédés de contrôle des réseaux IP (facturation, évaluation/assurance de la qualité de service par exemple) et d'ingénierie IP (routage, dimensionnement des réseaux par exemple). En particulier, l'identification des flux véhiculés sur un réseau IP permet d'agir conformément aux objectifs estimés en termes de qualités de services tels que la réallocation dynamique des ressources réseaux et l'application des règles d'utilisation (interruption d'une application non-autorisée, interception ou inspection légale de trafics).

Certaines applications, telles que P2P, streaming, messageries instantanées audio-visuelles et jeux en réseaux, peuvent causer des problèmes de congestion des réseaux et occuper des ressources réseaux d'une manière illicite et/ou excessive au détriment d'autres applications. Aussi une caractérisation des flux de données relatifs aux applications identifiées est-elle nécessaire afin d'appliquer des règles d'utilisation adéquates telle que la restriction de chaque application aux ressources qui lui sont allouées (débit, ports par exemple). A titre d'exemple, un opérateur réseau peut définir des tarifications, des qualités de service et/ou des droits d'utilisation par type d'application.

On connaît un certain nombre de procédés et de systèmes destinés à gérer la tâche de classification du trafic IP. Les principales mesures techniques de classification du trafic IP proposées dans l'art antérieur s'appuient sur :
- le filtrage de protocoles sur la base des signatures au niveau de l'en-tête des paquets (adresse de la source/destination, numéro de port, taille des paquets par exemple);
- le filtrage du contenu des paquets, par exemple l'analyse en profondeur des paquets ou *Deep Packet Inspection (DPI) ;*
- des paramètres statistiques descriptifs des flux au sein du trafic IP. A titre d'exemple, on peut citer la taille moyenne, minimale ou maximale des paquets, la variance de la taille des paquets, la distribution statistique de la taille des paquets, la moyenne des temps inter-arrivée des paquets, la variance des temps inter-arrivée des paquets, le nombre d'octets dans les paquets, la durée de la session, ou encore le volume total transféré.

Une première méthode de classification consiste à effectuer une correspondance port-application. Cette méthode, qui peut être considérée comme la technique de classification la plus simple, est généralement proposée à titre de fonctionnalité de base dans les routeurs équipant les réseaux des fournisseurs d'accès à Internet (routeurs Cisco, Juniper, Extreme Network, Foundry). Cependant, cette première technique n'est pas suffisante pour identifier des applications utilisant des ports reconfigurables, dynamiquement variables ou déjà affectés à d'autres applications (A. Moore et al, «Towards the accurate identification of network applications »,PAM2005). La plupart des applications P2P autorisent leurs utilisateurs à choisir manuellement le port qu'ils décident d'affecter au trafic P2P. Les applications P2P utilisent souvent des ports que les administrateurs internes doivent laisser ouverts, comme par exemple le port 80 dédié par défaut au protocole HTTP.

Une deuxième méthode de classification consiste à effectuer une analyse systématique du contenu des paquets. Cette méthode, bien que plus précise que la première, nécessite beaucoup de ressources et s'avère inopérante lorsque le trafic est chiffré. En outre, cette technique soulève le problème du respect de la vie privée.

Plus récemment, un intérêt particulier est apparu pour une troisième méthode de classification basée sur une technique d'apprentissage automatique (de l'anglais *Machine Learning),* qui peut être mise en oeuvre indépendamment du contenu des paquets et des protocoles utilisés. Cette méthode constitue un outil efficace et prometteur dans le domaine de classification de trafics IP *(*T. T. Nguyen et al, « A survey of techniques for Internet traffic classification using machine learningo, IEEE Communications surveys & tutorials, 2008*).*

L'apprentissage automatique est un procédé permettant à un ordinateur, ou plus généralement à toute machine, d'accroître ses connaissances sur le comportement des applications sur un réseau IP et d'améliorer les résultats de sa classification du trafic compte tenu de ses expériences et de ses actes passés.

Ayant surmonté les incommodités des techniques de classifications basées sur le filtrage de protocoles ou du contenu des paquets, il paraît, à ce stade, que la technique de classification de trafics IP utilisant l'apprentissage automatique est la plus efficace.

Toutefois, le déploiement des techniques de classifications basées sur l'apprentissage automatique comporte plusieurs difficultés.

La plus importante réside dans la mise en oeuvre d'une exécution en temps réel et en ligne de la classification. En effet, la classification du trafic doit pouvoir être déployée dans d'un procédé de détection d'une intrusion *(*V. Paxson, « Bro : A system for detecting network intruders in real-time », Computer Networks, no. 31, pp.2435-2463, 1999), dans le but de réagir en temps réel à toute éventuelle attaque.

La réalisation en temps réel de la classification du trafic est encore plus impérative dans les réseaux haut-débits dans lesquels la classification concerne un trafic d'un débit allant de plusieurs MBit/s (pour une petite entreprise) à quelques GBit/s (pour une grande entreprise ou pour une université).

En outre, le déploiement d'une technique de classification est nécessaire aux différents noeuds du réseau IP afin de comprendre l'évolution du trafic sur chaque lien ou chaque sous-réseau et y appliquer des politiques de qualité de service appropriées. En effet, les opérateurs ou les administrateurs réseaux IP souhaitent avoir la liste des applications actives ainsi que leurs caractéristiques sur chaque noeud de leurs réseaux IP. La reproduction de la classification du trafic IP sur tous les noeuds d'un réseau permet, à titre d'exemple, de :
- garantir des règles d'utilisation d'une manière sélective (pas de trafic VoIP sur le sous-réseau des étudiants contrairement à celui des enseignants dans une université, pas de trafic messagerie instantanée sur le sous-réseau des salariés contrairement à celui de la direction d'une entreprise, pas de trafic pair à pair sur l'intégralité du réseau par exemple) ;
- s'adapter aux évolutions du trafic au niveau de chaque noeud du réseau IP (réallocation des ressources : une application VoIP est prioritaire sur une application de transfert de fichiers (FTP) par exemple) ;

Cependant, la classification du trafic basée sur l'apprentissage automatique comprend un grand nombre de traitements, tels que :
- le calcul des statistiques (valeur moyenne/maximale/minimale, écart-type, variance, modèle de distribution par exemple) d'un ou plusieurs attributs de caractérisation du trafic (taille du paquet, temps inter-arrivée, nombre d'octets, durée d'une session, volume total transféré par exemple) sur des observations (ou traces) qui contiennent des échantillons représentatifs des applications qu'on souhaite classifier au niveau d'un noeud du réseau IP;
- l'analyse des statistiques afin d'obtenir des modèles de comportement d'applications en utilisant des algorithmes de regroupement homogène *(clusterisation) ;*
- la mesure des caractéristiques des clusters et la correspondance cluster-application.

Le déploiement de cette classification risque en conséquence de ne pas satisfaire les deux contraintes précitées, à savoir :
- exécution en temps réel et en ligne ;
- reproduction à tous les noeuds du réseau IP.

L'invention vise notamment à apporter une solution aux difficultés évoquées ci-dessus.

Un premier objet de l'invention est de permettre un déploiement temps réel en ligne des techniques d'apprentissage automatique dans la classification du trafic IP.

Un second objet de la présente invention est d'améliorer la dynamique du traitement du trafic au niveau des différents noeuds du réseau IP.

Un troisième objet de la présente invention est de permettre un déploiement commode des techniques d'apprentissage dans la classification du trafic IP sur les réseaux haut-débit.

A cette fin, l'invention se rapporte, selon un premier aspect, à un procédé de classification de trafic au sein d'un réseau de bordure comprenant une pluralité de noeuds de réseau interconnectés, qui comprend :
- une étape d'apprentissage, généralement effectuée hors ligne au niveau d'un sous-ensemble de noeuds du réseau, strictement inclus dans l'ensemble des noeuds du réseau, permettant d'identifier les applications dans le trafic sur la base d'un ou plusieurs attributs de caractérisation ;
- une étape de collecte des résultats de l'étape d'apprentissage ;
- une étape de traitement numérique des résultats ;
- une étape de diffusion des résultats du traitement aux autres noeuds du réseau
- une étape de classification en ligne du trafic en utilisant les résultats de l'étape d'apprentissage ;

Ce procédé permet ainsi de constituer une classification coopérative de trafic.

Le sous-ensemble des noeuds au niveau desquels une étape d'apprentissage est effectuée comprend de préférence l'ensemble des noeuds de bordure, tandis que le sous-ensemble des noeuds au niveau desquels l'étape d'apprentissage est effectuée comprend des noeuds d'accès.

Les résultats du traitement comprennent par exemple le nombre d'applications identifiées dans le trafic, le ou les attributs de caractérisation et la taille optimale de la fenêtre d'observation.

La classification du trafic sur le réseau de bordure comprend par exemple :
- une classification non-supervisée du trafic au niveau dudit sous-ensemble des noeuds ;
- une classification supervisée du trafic au niveau desdits autres noeuds.

Suivant un mode de réalisation, les noeuds internes utilisent les résultats de l'étape d'apprentissage effectué au niveau des noeuds de bordure du réseau de bordure.

La classification du trafic IP au niveau des noeuds internes ne comprend pas, par contre, d'étape d'apprentissage.

L'étape d'apprentissage utilise de préférence une fenêtre d'observation du trafic sur le réseau de bordure de taille N+m, où N est un nombre fixe et m et un nombre variable en fonction de la précision souhaitée de la classification du trafic.

L'invention propose, selon un deuxième aspect, un réseau de bordure comprenant une pluralité de noeuds de réseau interconnectés, comprenant :
- un sous-ensemble de noeuds, strictement inclus dans l'ensemble des noeuds du réseau et configuré pour y effectuer, dans le cadre d'un procédé de classification de trafic au sein du réseau, une étape d'apprentissage visant à identifier les applications dans le trafic au sein du réseau ;
- un plan de connaissance configuré pour :
   ○ collecter les résultats de l'étape d'apprentissage effectuées au niveau dudit sous-ensembles des noeuds;
   ○ traiter les résultats collectés ;
   ○ diffuser les résultats traités aux autres noeuds du réseau, préalablement à l'étape de classification, dans le cadre d'un procédé de classification de trafic au sein du réseau.

Le plan de connaissance est de préférence configuré pour homogénéiser les résultats récupérés. Il s'agit par exemple d'un serveur connecté aux noeuds du réseau de bordure.

D'autres caractéristiques et avantages de l'invention apparaîtront plus clairement et de manière complète à la lecture de la description ci-après d'une variante préférée de mise en oeuvre du procédé et de réalisation du système, laquelle est faite en référence aux figures annexées dans lesquels :
- la figure 1 illustre schématiquement le contexte d'application de la présente invention,
- la figure 2 représente une représentation fonctionnelle, non limitative du système de l'invention.
Les symboles graphiques semblables sur l'ensemble des figures désignent les mêmes éléments.

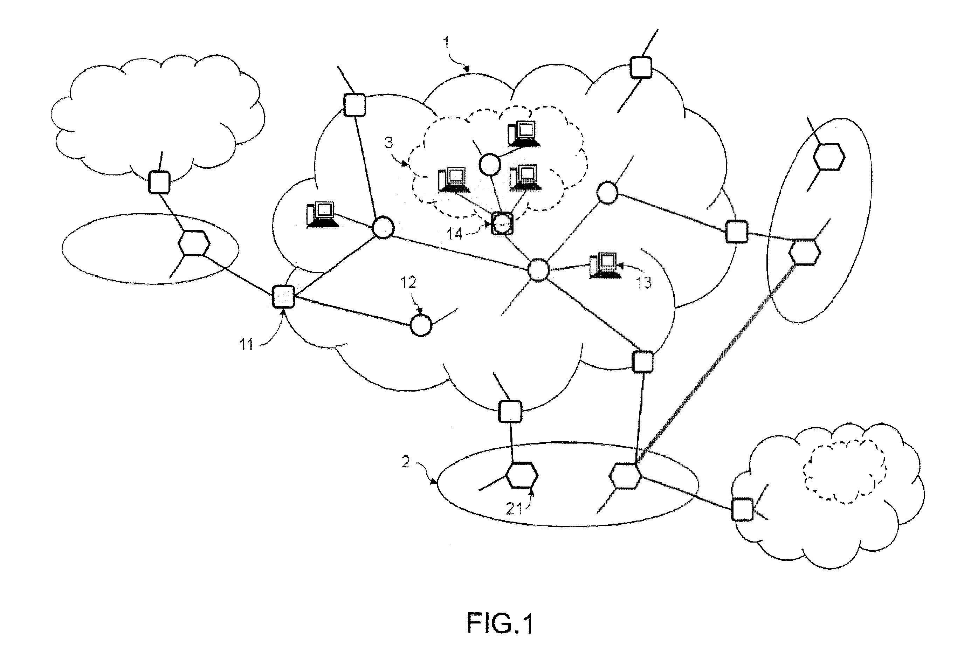

Sur la figure 1 sont représentés des réseaux IP **1** de communication, appelés réseaux de bordure **1,** connectés aux réseaux des fournisseurs d'accès **2,** appelés réseaux de transit **2.**

Par réseau IP on désigne tout réseau comprenant un ensemble de machines reliées entre elles par divers médias réseau (fibre optique, câble, faisceaux hertziens par exemple) et dont chacune est identifiable par une ou plusieurs adresses IP. Par terminal IP, on entend toute machine du réseau IP tel qu'un ordinateur, un serveur, un PDA ou un téléphone IP.

Les réseaux de transit **2** permettent aux réseaux de bordure **1** d'être connectés à l'Internet ou à d'autres réseaux de bordure **1.** Les réseaux de transit **2** appartiennent aux fournisseurs d'accès tels que France Telecom ou Sprint. Le réseau IP d'une université, d'une entreprise ou, plus généralement, d'une communauté est un exemple de réseau de bordure **1.**

Des noeuds de bordure **11** et des noeuds de transit **21** relient les réseaux de bordure **1** aux réseaux de transit **2.**

Un terminal IP **13** du réseau de bordure **1** se connecte à Internet ou à d'autres terminaux du même réseau ou d'autres réseaux via des noeuds internes **12** et/ou des noeuds de bordure **11.** Le trafic d'un terminal IP **13** provenant de (respectivement destiné à) un autre terminal IP transite au moins via un noeud interne **12** et/ou un noeud de bordure **11.**

Un réseau de bordure **1** peut comprendre des sous-réseaux **3.** Un sous-réseau désigne un réseau physique faisant lui-même partie du réseau de bordure **1** plus global.

Les noeuds **14** d'accès au sous-réseau **3** sont à la fois des noeuds internes pour le réseau de bordure **1** et des noeuds de bordure pour le sous-réseau **3.** Par conséquent, dans la suite, la notion de noeud de bordure désignera tout noeud d'accès à un réseau de bordure **1** ou à un sous-réseau **3.**

Les noeuds de bordure **11** sont des noeuds d'entrée/sortie principales de trafics pour les réseaux de bordure **1.** Par conséquent, l'analyse et la classification du trafic au niveau des noeuds de bordure **11** sont très importantes. De ce fait, chaque noeud de bordure **11** opère indépendamment des autres noeuds **11, 12** et sans assistance de ceux-ci, qu'ils soient internes ou de bordure.

En fonction de la taille des sous-réseaux **3,** les noeuds **14** d'accès peuvent être considérés comme des noeuds internes **12** ou des noeuds de bordure **11.** A titre d'exemple, dans un sous-réseau **3** d'un réseau de bordure **1** d'une université, le noeud **14** d'accès sera considéré comme un noeud de bordure si ce sous-réseau **3** est celui des étudiants et un noeud interne si ce sous-réseau **3** est celui de l'administration.

Le déroulement de la procédure d'apprentissage automatique, au niveau des noeuds de bordure **11,** comprend les étapes suivantes:
- une étape d'apprentissage, généralement réalisée hors ligne ;
- une étape de classification du trafic en temps réel.

L'étape d'apprentissage comprend plusieurs opérations de traitement, à savoir :
i. collecte d'un certain nombre de paquets successifs du trafic au niveau des noeuds de bordure par un logiciel de capture de paquets (Winpcap par exemple). Le nombre de paquets représente la taille de la fenêtre d'observation ;
ii. sélection d'un ou plusieurs attributs de caractérisation ;
iii. calcul des valeurs des attributs relatives aux observations récoltées ;
iv. clusterisation : regroupement homogène des valeurs des attributs ;
v. correspondance cluster-application ;
vi. répétition des étapes ii), iii) et iv) et v) pour différents attributs de caractérisation ;
vii. détermination des attributs les plus adéquats à utiliser pour la classification ;
viii. répétition de tous les traitements précédents pour différentes tailles des fenêtres d'observation. Le cas échéant, la totalité du trafic est copiée ;
ix. associer aux différentes fenêtres d'observation les attributs les plus adéquats à utiliser pour la classification.

On note que certains attributs de caractérisation, en particulier ceux qui sont liés au temps, tels que la moyenne des temps d'inter-arrivée entre les paquets ou le temps d'inter-arrivée maximal entre les paquets, peuvent être liés à l'état du réseau IP (congestion du réseau, saturation des ressources par exemple).

La clusterisation désigne la partition de données en groupes, appelés clusters, de sorte que les éléments de chaque cluster sont similaires à eux-mêmes plus qu'aux éléments des autres clusters. Une multitude d'algorithmes de clusterisation existent dans l'art antérieur. Gaussian Mixture Model (GMM), Expectation Maximization (EM), clusterisation hiérarchique, K-means, Kernel K-means, C-means et Fuzz C-means sont des exemples d'algorithmes de clusterisation (I.H. Witten et al, « Data miinig : practical machine learning tools and techniques », 2nd edition, Ed. Morgan Kaufmann, 2005 *-* Rui Xu et al, « Survey of clustering algorithms", IEEE Tran. On Neural networks, Vol. 16, may 2005*).*

Si une application ne peut pas être identifiée, elle est d'office classée comme application inconnue. Une fenêtre d'observation de faible taille peut être à l'origine de la non-identification d'une application.

Le nombre des paquets successifs utilisés dans l'étape d'apprentissage est égal à N+m, où N est un nombre entier fixe, m étant un nombre entier variable, ce qui permet de constituer une fenêtre d'observation de taille variable en fonction de la précision souhaitée. La taille de la fenêtre d'observation est négligeable par rapport à la durée minimale des sessions de connexion des différentes applications afin de garantir une classification en temps réel, contrairement à une classification a posteriori qui s'effectue à la fin d'une session de connexion.

Généralement, la taille minimale N de la fenêtre d'observation est de l'ordre de 4 paquets au sein du trafic IP.

Le caractère variable du nombre N+m des paquets utilisés vise à permettre une clusterisation optimale, dans laquelle chaque cluster correspond exactement à une application. Le nombre variable m permet de calibrer les méthodes de clusterisation qui dépendent du nombre des paquets N+m. La valeur de m peut être automatiquement estimée à l'aide d'un algorithme d'évaluation de la clusterisation tel que NMI (Information Mutuelle N).

On distingue deux méthodes d'apprentissage:
- apprentissage supervisé : production automatique de règles à partir d'un trafic dont la composition en applications est connue ;
- apprentissage non supervisé : traitement des observations collectées en vue de la construction d'un modèle.

L'étape d'apprentissage permet de déterminer :
- le nombre d'applications à identifier dans le trafic par taille de fenêtre d'observations ;
- le ou les attributs à utiliser dans l'étape de classification par taille de fenêtre d'observation ;
- la taille optimale de la fenêtre d'observation ;
- le triplet (taille de la fenêtre d'observation, attributs de caractérisation, nombre d'applications) optimal conduisant à une classification répondant à des critères prédéterminés (pour la rapidité: un nombre de paquets minimal, pour l'efficacité et la précision : attributs les plus distinctifs entre les applications et identification de toutes les applications contenues dans le trafic par exemple)

L'étape de classification comprend les opérations de traitement suivantes :
- collecte des échantillons du trafic en cours ;
- clusterisation sur la base du nombre d'applications et des attributs de caractérisation déjà estimés pendant une étape d'apprentissage non supervisée (ou application des règles de classification déjà produites pendant une étape d'apprentissage supervisée) ;
- caractérisation des clusters et identification des applications correspondantes.

L'étape de la classification utilise les attributs optimaux donnés par l'étape d'apprentissage. Elle utilise les valeurs de ces attributs sur les connexions qui sont disponibles dans la fenêtre d'observation dont la taille est estimée pendant l'étape d'apprentissage.

Une fenêtre d'observation de faible taille par rapport à la durée de la session de connexion d'une application permet une classification temps réel et par conséquent un traitement dynamique sur les connexions, telles que l'amélioration de la qualité de service ou l'application en temps réel des règles d'utilisation.

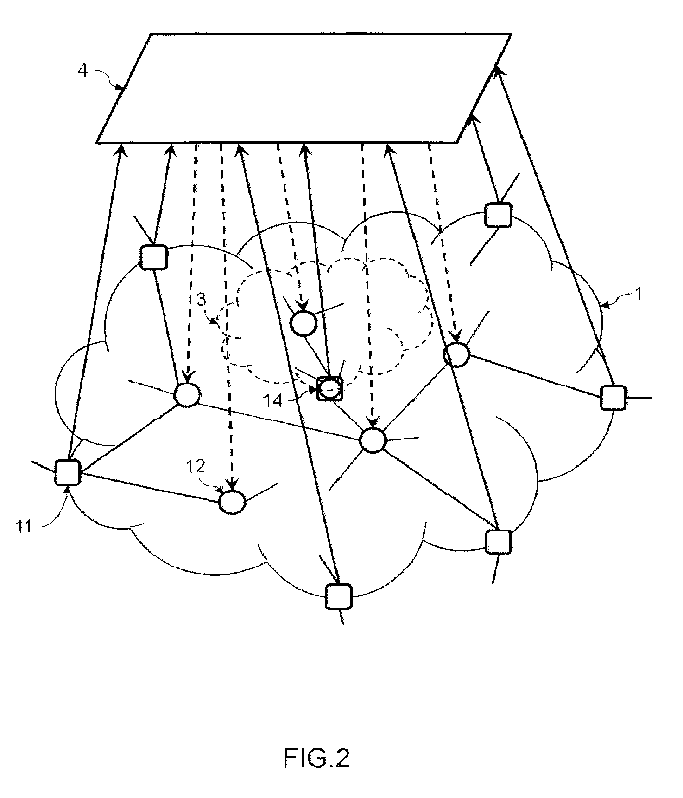

Suivant un mode de réalisation, illustré sur la figure 2, un plan **4** de connaissance récupère les résultats des étapes d'apprentissage effectuées au niveau des noeuds de bordure **11.**

L'expression « plan de connaissance » désigne ici tout élément (tel qu'un serveur) comprenant une application logicielle (programme, sous-programme, plugin, protocole), implémentée indépendamment ou en combinaison avec d'autres applications, et apte à assurer les fonctions suivantes :
- collecter des données d'un sous-ensemble de noeuds du réseau de bordure **1 ;**
- effectuer des traitements numérique sur les données collectées à l'aide des moyens de calcul ;
- stocker des données à l'aide des moyens de stockage ;
- diffuser des données à des noeuds du réseau de bordure **1.**

En variante, le plan **4** de connaissance peut être remplacé par un procédé de signalisation ou un protocole de communication.

Le plan **4** de connaissance effectue un traitement numérique sur les résultats récupérés à partir des noeuds de bordure selon des règles prédéterminées. Ce traitement numérique vise à homogénéiser les résultats récupérés. Ensuite, le plan **4** de connaissance diffuse des résultats du traitement aux noeuds internes **12.**

Dans la mesure où les résultats des étapes d'apprentissage diffèrent d'un noeud de bordure **11** à un autre (par exemple s'agissant du nombre des clusters (applications) ou des caractéristiques d'un cluster en commun) les règles prédéterminées du traitement numérique à appliquer aux résultats collectés par le plan **4** de connaissance comprennent la prise en compte :
- du nombre maximum ou minimum de clusters, ou la partie entière de la moyenne des nombres de clusters ;
- la valeur minimale, moyenne ou maximale d'une caractéristique d'un cluster en commun ;
- la valeur moyenne avec pondération en fonction des noeuds de bordure d'une caractéristique d'un cluster en commun ;

Une classification est dite supervisée si le nombre d'applications dans le trafic est connu à l'avance. Dans le cas contraire, la classification et dite non-supervisée.

La disponibilité des résultats des étapes d'apprentissage effectuées au niveau des noeuds de bordure **11** permet de réaliser une classification supervisée au niveau des noeuds internes **12.** Autrement dit, il n'est plus nécessaire d'effectuer à nouveau l'étape d'apprentissage au niveau des noeuds internes **12** puisque les attributs de caractérisation, le nombre d'applications et la taille de la fenêtre d'observation ont déjà été identifiés au cours de l'étape d'apprentissage effectuée au niveau des noeuds de bordure **11.**

L'étape de classification effectuée au niveau des noeuds internes **12** est identique à celle qui est effectuée au niveau des noeuds de bordure **11.**

Un avantage d'une telle mise en partage des résultats de l'étape d'apprentissage permet de réduire la complexité de la tâche de classification de trafics IP au niveau des noeuds internes **11.** Cette méthode permet d'économiser le temps nécessaire à la classification du trafic IP et les ressources de calcul associées à l'étape d'apprentissage.

Le contenu du plan **4** de connaissance est continuellement mis à jour. A titre d'exemples, toutes applications nouvellement découvertes, toutes modifications au niveau des caractéristiques des applications sont récupérées par le plan de connaissance pour être diffusées sur la totalité du réseau. En conséquence, les noeuds internes **12** mettent à jour leurs structures de classification.

Le partage des résultats de l'étape d'apprentissage peut être effectué via le plan **4** de connaissance ou tout procédé de signalisation permettant d'acheminer les résultats de l'étape d'apprentissage des noeuds de bordure **11** aux noeuds internes **12.**

Le plan **4** de connaissance favorise une coopération entres les noeuds de bordure **11** et les noeuds internes **12** dans le procédé de classification, basée sur l'apprentissage automatique du trafic sur le réseau de bordure **1.**

Le plan **4** de connaissance permet de diffuser les résultats de l'étape d'apprentissage effectuée au niveau des noeuds de bordure **11** sur tous les noeuds internes **12** du réseau de bordure **1.** Ces informations comprennent le nombre de clusters (le nombre d'applications), la taille de la fenêtre d'observation, les paramètres descriptifs des clusters tels que l'étalement des attributs au sein d'un cluster, la valeur moyenne des attributs au sein d'un cluster, les distances inter-clusters.

Le plan **4** de connaissance associe aux observations effectuées par les noeuds internes **12** toutes les informations nécessaires à l'étape de la classification (nombre des clusters, paramètres intra- et inter-clusters, attributs de caractérisation).

Il est à noter que le plan **4** de connaissance est fonctionnel dans le cas d'une classification de trafics unidirectionnels ou bidirectionnels sur un réseau de bordure **1.**

La centralisation des résultats de l'étape d'apprentissage au niveau du plan **4** de connaissance permet un meilleur contrôle de la classification de trafics. Le plan **4** de connaissance permet de :
- transmettre aux noeuds internes les informations nécessaires à l'étape de classification ;
- disposer d'une photographie globale des applications actives sur le réseau ;
- déclencher une étape d'apprentissage au niveau des noeuds de bordure **11** si le nombre des applications non-identifiées dépasse un seuil prédéfini ;
- sauvegarder les résultats des étapes d'apprentissage pour une éventuelle future exploration de ces résultats.

En variante, l'étape d'apprentissage peut être faite au niveau des noeuds internes **12** et transmise vers les noeuds de bordure **11** via le plan **4** de connaissance.

L'étape d'apprentissage est répétée périodiquement afin de garder une vue à jour du trafic du réseau. Généralement, la périodicité de cette étape est beaucoup plus grande que la durée maximale des sessions de connexion des différentes applications. En pratique, elle est de l'ordre de quelques jours ou quelques semaines.

## Revendications

1. Procédé de classification de trafic au sein d'un réseau de bordure (**1**) comprenant une pluralité de noeuds de réseau interconnectés, qui comprend :
- une étape d'apprentissage, généralement effectuée hors ligne, permettant d'identifier les applications dans le trafic sur la base d'un ou plusieurs attributs de caractérisation
- une étape de classification en ligne du trafic en utilisant les résultats de l'étape d'apprentissage
procédé **caractérisé en ce que :**
- l'étape d'apprentissage est effectuée au niveau d'un sous-ensemble de noeuds du réseau, strictement inclus dans l'ensemble des noeuds du réseau
et **en ce qu'**il comprend, préalablement à l'étape de classification :
- une étape de collecte des résultats de l'étape d'apprentissage ;
- une étape de traitement numérique des résultats ;
- une étape de diffusion des résultats du traitement aux autres noeuds du réseau
de sorte à constituer une classification coopérative de trafic.

2. Procédé selon la revendication 1, **caractérisé en ce que** le sous-ensemble des noeuds au niveau desquels une étape d'apprentissage est effectuée comprend l'ensemble des noeuds de bordure (**11**).

3. Procédé selon la revendication 1, **caractérisé en ce que** le sous-ensemble des noeuds au niveau desquels l'étape d'apprentissage est effectuée comprend des noeuds (**14**) d'accès.

4. Procédé selon la revendication 1, **caractérisé en ce que** les résultats du traitement comprennent le nombre d'applications identifiées dans le trafic, le ou les attributs de caractérisation et la taille optimale de la fenêtre d'observation.

5. Procédé selon l'une quelconque des revendications précédentes, **caractérisé en ce que** la classification du trafic sur le réseau de bordure (**1**) comprend :
- une classification non-supervisée du trafic au niveau dudit sous-ensemble des noeuds;
- une classification supervisée du trafic au niveau desdits autres noeuds.

6. Procédé selon les revendications 1 à 3, **caractérisé en ce que** les noeuds internes (**12**) utilisent les résultats de l'étape d'apprentissage effectué au niveau des noeuds de bordure (**11**) du réseau de bordure (**1**).

7. Procédé selon la revendication 6, **caractérisé en ce que** la classification du trafic IP au niveau des noeuds internes (**12**) ne comprend pas d'étape d'apprentissage.

8. Procédé selon la revendication 1, **caractérisé en ce que** l'étape d'apprentissage utilise une fenêtre d'observation du trafic sur le réseau de bordure (**1**) de taille N+m, où N est un nombre fixe et m et un nombre variable en fonction de la précision souhaitée de la classification du trafic.

9. Réseau de bordure (**1**) comprenant une pluralité de noeuds de réseau interconnectés, **caractérisé en ce qu'**il comprend:
- un sous-ensemble de noeuds, strictement inclus dans l'ensemble des noeuds du réseau et configuré pour y effectuer, dans le cadre d'un procédé de classification de trafic au sein du réseau, une étape d'apprentissage visant à identifier les applications dans le trafic au sein du réseau ;
- un plan de connaissance (**4**) configuré pour :
○ collecter les résultats de l'étape d'apprentissage effectuées au niveau dudit sous-ensembles des noeuds ;
○ traiter les résultats collectés ;
○ diffuser les résultats traités aux autres noeuds du réseau, préalablement à l'étape de classification, dans le cadre d'un procédé de classification de trafic au sein du réseau.

10. Réseau de bordure (**1**) selon la revendication 9, **caractérisé en ce que** le plan (**4**) de connaissance est configuré pour homogénéiser les résultats récupérés.

11. Réseau de bordure (**1**) selon la revendication 9 ou 10, **caractérisé en ce que** le plan (**4**) de connaissance est un serveur connecté aux noeuds du réseau de bordure (**1**).
